# DEMANDE DE BREVET EUROPEEN

(11) **EP 1 352 938 A1**
(43) Date de publication de la demande: **15.10.2003**
(21) Numéro de dépôt: 03290138.1
(22) Date de dépôt: 21.01.2003
(51) Int. Cl.: C09J 5/08, C09J 7/00, B32B 27/08

(54) **Film thermocollant alvéolaire et son procédé de fabrication**

(30) Priorité: 21.01.2002 FR 0200664
(71) Demandeur: Prochimir, 85700 Pouzauges (FR)
(72) Inventeur: Goupille, Alex, 85700 Pouzauges (FR); Pruvot, Fabien, 85700 Pouzauges (FR); Lescroart, Vianney, 44470 Thouare sur Loire (FR)
(74) Mandataire: Fosse, Danièle

(57) **Abrégé**

L'invention concerne un film thermocollant (1) destiné à être appliqué sur au moins un substrat (S1), de préférence textile, ou à être interposé entre deux substrats (S1, S2) de nature identique ou différente pour l'assemblage par contre-collage, généralement par thermocollage desdits substrats (S1, S2), ledit film thermocollant (1) étant constitué d'au moins une couche contenant au moins une matière thermoplastique extrudable thermocollante à une température supérieure à la température de fusion de ladite matière et éventuellement un agent anti-bloc et/ou anti-glissant.

Ce film thermocollant (1) est caractérisé en ce qu'il comprend, en sortie de fabrication, au moins une couche thermocollante à structure alvéolaire constituée de cavités ouvertes et/ou fermées, lesdites cavités étant le résultat de l'action d'au moins un agent gonflant contenu dans la couche thermocollante et actif lors de la fabrication du film.

## Description

La présente invention concerne un film thermocollant destiné à être appliqué sur au moins un support, de préférence textile, ou à être interposé entre deux supports de nature identique ou différente pour l'assemblage par contre-collage, généralement par thermocollage, desdits substrats, ledit film étant constitué d'au moins une couche contenant au moins une matière thermoplastique extrudable thermocollante à une température supérieure à la température de fusion de ladite matière et pouvant contenir un agent anti-bloc et/ou anti-glissant ainsi que tous les autres types d'additifs utilisés dans les polymères ainsi qu'un procédé de fabrication d'un tel film.

L'utilisation d'adhésif se présentant sous forme de film thermocollant s'est développée ces dernières années. En effet, les films thermocollants présentent, par rapport aux adhésifs liquides ou pâteux, un certain nombre d'avantages. En particulier, l'épaisseur de la couche adhésive servant à l'assemblage de substrats de nature identique ou différente est régulière et précise. De même, les quantités de films thermocollants utilisées sont aisément mesurables. Par ailleurs, la température de fusion du film est déterminée pour correspondre aux caractéristiques des matériaux devant être liés. Enfin, la présentation sous forme de film d'un tel adhésif permet d'atteindre des vitesses de pose élevées tout en maintenant des investissements en machine relativement réduits.

De tels films, qui sont aisément stockables pendant de longues périodes, présentent en outre l'avantage de ne pas nécessiter une préparation telle que la pose d'un revêtement primaire sur des substrats avant leur application et de ne pas générer l'émission de fumée ou de solvant dans l'environnement au moment de leur application.

Toutefois, de tels films présentent encore un inconvénient lié à leur rigidité trop importante, en particulier lorsque ces films sont utilisés pour le contre-collage de supports textiles.

Des films thermocollants présentant une souplesse améliorée ont d'ores et déjà été décrits dans l'état de la technique comme l'illustrent en particulier le brevet EP-A-0.345.855 ou le brevet EP-A-.212.970. Toutefois, à chaque fois le film, issu des étapes de fabrication, comporte un agent gonflant non activé. L'activation de cet agent gonflant en vue de générer la formation de bulles d'air s'effectue au moment du collage du film. Il en résulte une perturbation du collage du film par les poches d'air ainsi formées. De ce fait, la qualité de collage est médiocre. Ce même inconvénient est présent dans les films décrits dans le brevet US-A-5.225.450. A nouveau, dans ce document, il est décrit un film dont la couche thermocollante contient un agent gonflant ou moussant qui agit au moment de la mise en oeuvre finale du film, c'est-à-dire lors du collage de ce film sur un support quelconque. Lors de la fabrication de ce film, l'agent gonflant est non actif de telle sorte que les poches d'air résultant de l'action de cet agent gonflant n'apparaîtront qu'au moment du collage du film. Ce même film thermocollant peut être utilisé pour la fabrication de panneaux sandwich comme l'illustre le brevet EP-A-0.636.463 qui est probablement issu des mêmes équipes de recherche que le document américain précédent. A nouveau, l'agent gonflant du film thermocollant est activé lors de l'étape de collage du film, en l'occurrence ici lors de l'étape de collage d'un film thermocollant à deux couches d'une résine thermoplastique renforcée en fibres de manière à former un panneau sandwich.

Un but de la présente invention est donc de proposer un film thermocollant d'un nouveau type dont la conception permet l'obtention d'un film poreux dont la souplesse et les propriétés acoustiques sont accrues sans nuire aux propriétés adhésives de ce dernier.

Un autre but de la présente invention est de proposer un film dont la conception permet la réalisation d'un complexe substrat/film thermocollé, substrat dont la souplesse est accrue.

A cet effet, l'invention a pour objet un film thermocollant destiné à être appliqué sur au moins un substrat, de préférence textile, ou à être interposé entre deux substrats de nature identique ou différente pour l'assemblage par contre-collage, généralement par thermocollage desdits substrats, ledit film thermocollant étant constitué d'au moins une couche contenant au moins une matière thermoplastique extrudable thermocollante à une température supérieure à la température de fusion de ladite matière et éventuellement un agent anti-bloc et/ou anti-glissant, caractérisé en ce que le film comprend, en sortie de fabrication, au moins une couche thermocollante à structure alvéolaire constituée de cavités ouvertes et/ou fermées, lesdites cavités étant le résultat de l'action d'au moins un agent gonflant contenu dans la couche thermocollante et actif lors de la fabrication du film.

Selon une forme de réalisation préférée de l'invention, l'agent gonflant ou au moins l'un des agents gonflants de la couche thermocollante est actif lors de l'extrusion de ladite couche ou en sortie d'extrudeuse de manière à former, à l'état extrudé de ladite couche, une couche thermocollante de film issu de fabrication présentant une structure alvéolaire constituée de cavités ouvertes et/ou fermées.

Comme mentionné ci-dessus, le film présente en sortie de fabrication, c'est-à-dire avant utilisation du film en vue d'un collage, un agent gonflant d'ores et déjà actif. L'action de l'agent gonflant au cours de l'extrusion ou en sortie d'extrudeuse permet d'obtenir, en sortie d'extrudeuse, un film dont la matière constitutive de la couche thermocollante présente d'ores et déjà une structure alvéolaire constituée de cavités ouvertes et/ou fermées. Selon la quantité et la nature de l'agent gonflant utilisé, le film ainsi produit peut présenter exclusivement des cavités ouvertes, des cavités ouvertes et/ou fermées ou uniquement des cavités fermées, au moins 90 % des cavités étant ouvrables au cours du collage du film sur un support de nature quelconque de manière à limiter, voire supprimer la présence de poche d'air après collage.

Il est à noter que le terme actif se réfère indifféremment à un agent gonflant directement actif lors de son introduction dans la matière constitutive de la couche thermocollante ou activé après introduction dans la matière constitutive de la couche thermocollante notamment du fait des conditions d'extrusion de ladite matière.

L'invention a encore pour objet un procédé de fabrication d'un film thermocollant destiné à être appliqué sur au moins un substrat, de préférence textile, ou à être interposé entre deux substrats de nature identique ou différente pour l'assemblage par contre-collage, généralement par thermocollage desdits substrats, ledit film étant constitué d'au moins une couche contenant au moins une matière thermoplastique extrudable thermocollante à une température supérieure à la température de fusion de ladite matière et éventuellement un agent anti-bloc et/ou anti-glissant, caractérisé en ce qu'on introduit dans la matière constitutive d'au moins une couche thermocollante du film au moins un agent gonflant actif lors de l'extrusion ou en sortie d'extrudeuse et en ce qu'on conforme ladite couche thermocollante sous forme d'une couche de film par gonflage ou coulage de manière à former une couche thermocollante de film présentant une structure alvéolaire constituée de cavités ouvertes et/ou fermées.

L'invention sera bien comprise à la lecture de la description suivante d'exemples de réalisation, en référence aux dessins annexés dans lesquels :

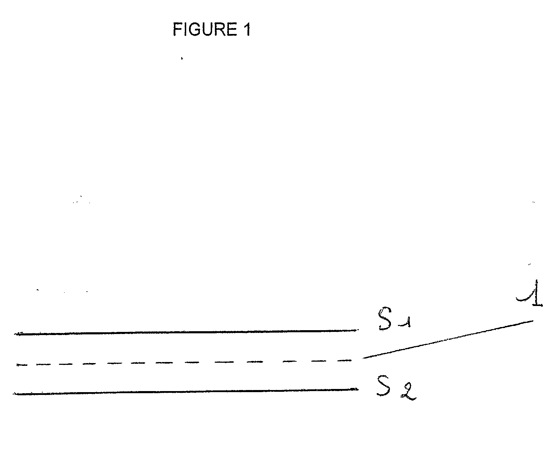

la figure 1 représente, de manière schématique, un film thermocollant multicouches dans lequel la couche thermocollante est interposée entre deux substrats et
la figure 2 représente un exemple d'extrudeuse servant à la fabrication d'un film conforme à l'invention.

Comme cela a d'ores et déjà été mentionné ci-dessus, le film thermocollant 1, objet de l'invention, est destiné soit à être appliqué sur au moins un support ou substrat S1 de préférence textile, soit à être interposé entre deux supports S1, S2 de nature identique ou différente pour l'assemblage par contre-collage, généralement par thermocollage desdits substrats. Dans ce second cas, on réalise un empilement comprenant les deux substrats à assembler et interposé entre ceux-ci le film adhésif dont les caractéristiques seront décrites ci-après. Cet empilement est ensuite porté à une température suffisante pour provoquer l'adhérence du film 1 aux substrats. Cette température est de préférence au moins égale à la température de fusion de la ou des matière(s) thermocollante(s), constitutive(s) du film. Généralement, cette température de collage est supérieure de 30 à 50°C à la température de fusion des matières thermocollantes constitutives du film.

Ce film est constitué d'au moins une couche contenant au moins une matière thermoplastique extrudable thermocollante à une température supérieure à la température de fusion de ladite matière et éventuellement un agent anti-bloc et/ou anti-glissant ainsi que tous les autres types d'additifs tels que colorants ou autres utilisés dans les polymères. Ainsi, un tel film peut comporter une couche thermocollante unique. Il peut également comporter deux couches thermocollantes de nature identique ou différente disposées de part et d'autre d'une couche neutre. La résine thermoplastique peut être choisie dans le groupe des composants constitués des
Polyéthylène ou polyéthylène modifié tel qu'un co-Polymère, un ter-Polymère
ou des Polypropylène ou polypropylène modifié tel qu'un co-Polymère, un ter-Polymère
ou des Polyuréthane base polyester ou polyéther
ou des Polyamide ou co-Polyamide
ou des Polyester ou co-Polyester
ou des Elastomères.

De manière similaire, l'agent anti-bloc et/ou anti-glissant peut être choisi dans le groupe des composants constitué par les amino-silicates sous forme de billes de verre, les talcs, les silices synthétiques ou minérales, les carbonates de calcium pour les agents anti-blocs et par les érucamides, les oléamides, les stéaramides, l'éthylène Bis Stéaramide (EBS), les cires pour les agents glissants.

De manière caractéristique à l'invention, cette couche thermocollante contient en outre au moins un agent gonflant actif lors de l'extrusion ou en sortie d'extrudeuse de manière à former, à l'état extrudé, une couche thermocollante à structure alvéolaire constituée de cavités ouvertes et/ou fermées. Au moins 90 % des cavités fermées sont ouvrables dans une plage de températures comprise entre la température de fusion de la matière thermoplastique thermocollante et la température de fusion de la matière thermoplastique thermocollante augmentée de 50°C. Cette plage de températures correspond à la plage de températures de thermocollage du film de telle sorte que, lors du thermocollage, on constate la disparition de la majorité des cavités fermées lorsqu'elles existent. Du fait que ces cavités sont d'ores et déjà formées en sortie de fabrication du film, leur éclatement, s'il ne s'est pas opéré pendant la fabrication du film, a lieu dès le début du collage de telle sorte que l'air issu de cet éclatement peut s'échapper dans l'atmosphère sans nuire au collage. Tel n'est pas le cas des films de l'état de la technique pour lesquels on constate, au cours du collage, la formation de poches d'air liées à l'action de l'agent gonflant, poches qui vont demeurer après le collage et éventuellement nuire à la qualité du collage.

Le type d'agent gonflant utilisé peut être fonction des techniques d'extrusion utilisées. Ainsi, l'agent gonflant utilisé, qui peut être assimilé à un agent porogène, puisque sa fonction est de créer des pores ou cavités ouvertes ou fermées à l'intérieur de ladite couche, peut être un agent gonflant chimique décomposé par réaction chimique exothermique au cours de l'extrusion pour libérer un gaz de préférence inerte. Ainsi, cet agent peut être choisi, par exemple, dans le groupe des composants formé par les composés azo, tels que les azodicarbonamides et leurs dérivés, les dérivés de l'hydrazine, tels que le p-toluènesulfonylhydrazide, le 4,4-oxibis (benzènesulfonylhydrazide), les semicarbazides, tels que le p-toluènesulfonylsemicarbazide, les tétrazoles, tels que le 5-phényltétrazole et les composés nitrosés tels que le N,N-dinitrosopentaméthylènetétramine.

En variante, il peut également être utilisé un agent gonflant chimique décomposé par réaction chimique endothermique au cours de l'extrusion pour libérer un gaz, de préférence inerte, cet agent gonflant étant choisi, par exemple, dans le groupe des constituants formé par les composés carbonates ou leurs dérivés tels que les carbonates ou bicarbonates de métaux alcalins ou alcalino-terreux, en particulier le bicarbonate de sodium, utilisés en mélange avec au moins un agent d'activation, tel que l'acide citrique.

Il est possible d'utiliser une combinaison de différentes catégories d'agents gonflants pour limiter la formation de gaz toxiques, accélérer la vitesse de décomposition ou donner une structure cellulaire non homogène.

Enfin, dans encore un autre mode de réalisation de l'invention, l'agent gonflant peut être un agent gonflant physique, tel qu'un gaz, injecté au cours de l'extrusion, en particulier en tête d'extrudeuse, ou un agent liquide transformé en gaz au cours de l'extrusion. Les alvéoles sont alors créées soit par libération de gaz qui est alors libéré par un procédé physique, typiquement par vaporisation d'un liquide soit par hausse de pression d'un gaz comprimé. Les gaz concernés sont de préférence tous ceux qui sont non nocifs. De même, les liquides concernés sont ceux qui par vaporisation génèrent de préférence des gaz non nocifs (CO2,H2O,N2,...).

De manière générale, les agents gonflants sont choisis de telle sorte que la température de décomposition de ces agents est compatible avec la température d'extrusion de la matière thermocollante. La libération du gaz gonflant doit avoir lieu dans une plage de température de ± 10-20°C par rapport à la température d'extrusion et doit être contrôlable durant le processus d'extrusion. La décomposition ne doit pas être catalysée pour éviter les accumulations de chaleur et provoquer la décomposition de la matière thermocollante voire une réaction en chaîne de l'agent gonflant. Le gaz gonflant doit être inerte étant entendu que l'azote et le dioxyde de carbone sont les gaz les plus intéressants. L'agent gonflant doit enfin s'incorporer facilement et de façon homogène dans la matière thermocollante lorsqu'il s'agit d'un agent gonflant chimique et doit être compatible avec cette matière thermocollante. Enfin, les résidus de décomposition doivent être compatibles avec la matière thermocollante et ne pas provoquer de décoloration.

Comme mentionné ci-dessus, l'incorporation de l'agent gonflant en fonction du type d'agent utilisé peut s'effectuer en divers emplacements au cours de l'extrusion. Ainsi, dans le cas d'une incorporation directe de bulles de gaz, cette incorporation pourra s'effectuer en entrée de filière dans la matière fondue ou au niveau de la tête de l'extrudeuse. L'agent gonflant peut encore être introduit dans l'extrudeuse sous forme d'un mélange avec la matière constitutive de la couche thermocollante. Dans tous les cas, cette incorporation doit être réalisée de manière telle que la couche thermocollante du film présente au moins, en sortie d'extrudeuse, une structure alvéolaire. Cette structure alvéolaire est constituée de cavités ouvertes et/ou de cavités fermées constituant des poches de gaz dont la destruction sera effectuée lors du collage du film, ce collage nécessitant une élévation de température du film à une température au moins égale à la température de fusion de la matière thermocollante.

Dans un premier mode de réalisation de l'invention, la couche thermocollante est extrudée sans couche support. Une telle mise en oeuvre demeure délicate.

Dans un autre mode de réalisation de l'invention, pour éviter tout endommagement du film au cours de sa fabrication, de sa manipulation ou de son stockage et permettre l'incorporation d'une quantité importante d'agent gonflant, le film peut comprendre au moins une seconde couche de préférence non thermocollante solidarisée à la couche thermocollante, de préférence au cours de l'extrusion. Cette couche, de préférence non thermocollante, dite couche support est généralement pelable pour permettre son élimination avant ou après collage du film sur son support S1 ou S2.

Dans un mode de réalisation particulier de l'invention, la couche thermocollante est interposée entre deux couches support de préférence non thermocollantes pelables. Chaque couche de préférence non thermocollante est de préférence constituée d'au moins un composant choisi dans le groupe des composants formés par les polyéthylènes modifiés ou non et les polypropylènes modifiés ou non.

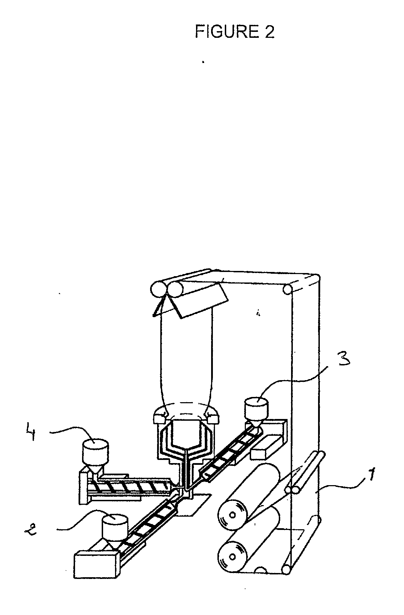

De préférence, les couches thermocollante et non thermocollante (ou support) du film sont co-extrudées et peuvent être réalisées au moyen d'une extrudeuse conforme à celle représentée à la figure 2. Dans ce cas, chaque couche du film est obtenue par extrusion gonflage. Ainsi, les composants des couches support sont introduits dans les trémies 2 et 3 tandis que les composants de la couche thermocollante sont introduits dans la trémie 4. Dans une variante de réalisation de l'invention, chaque couche du film peut encore être obtenue par extrusion coulage (ou extrusion cast).

A l'issue de sa fabrication, le film thermocollant présente une épaisseur comprise dans la plage [5 - 200] microns, de préférence voisine de 35 microns.

Il va à présent être décrit un exemple de fabrication d'un tel film.

Il est, dans un premier temps, nécessaire de préparer le mélange servant à la fabrication de la couche thermocollante. Les matières premières de ce mélange se présentent sous forme de granulés. En tant que matière thermocollante, il est utilisé un polyuréthanne thermoplastique base polyester. A 92 % en poids de ce produit sont ajoutés 6 % en masse d'un mélange maître anti-bloc et anti-glissant contenant 50 % en masse d'un agent actif sur une base polyuréthane, ce qui permet d'éliminer toute adhésion à froid du film.

Enfin, il est également ajouté 2,2 % d'un mélange maître contenant 0,66 % d'un agent gonflant endothermique constitué d'acide citrique et de bicarbonate de sodium sur base copolymère, l'acide citrique réagissant sur le bicarbonate de sodium lors d'une élévation de température. Cet agent gonflant, par le biais de la réaction chimique, libère un gaz dans la matière qui donne au film fini sa porosité.

Les formulations peuvent varier en fonction des objectifs à atteindre. Toutefois, la composition du mélange constitutif de cette couche thermocollante exprimée en pourcentage en poids peut être telle que suit (formulation I) :
- résine thermoplastique 70 à 99 %
   de préférence voisine de 96.24%
- agent glissant et/ou anti-bloc 0 à 29,8 %
   de préférence voisine de 3.1%
- agent gonflant 0,2 à 30 %
   de préférence voisine de 0.66%

Le mélange ainsi réalisé est homogénéisé par le biais d'un mélangeur. Ce mélange peut ensuite être étuvé à 60°C ou plus pendant 4 heures. Pour passer de l'état de granulé à l'état de film, il est utilisé une machine d'extrusion-gonflage multicouches conforme à celle représentée à la figure 2. Dans la première trémie 4, est introduit le mélange décrit ci-dessus. Dans la deuxième trémie 2 ou 3, est introduit le mélange servant à la fabrication d'une couche support. La composition de ce mélange peut ainsi être telle que suit (formulation II) :
- Polyéthylène 90 à 100 %
   de préférence voisine de 99.75%
- agent glissant 0 à 10%
   de préférence voisine de 0.05%
- agent anti-bloc 0 à 10%
   de préférence voisine de 0.2%

Une couche support analogue peut être utilisée pour permettre l'interposition de la couche thermocollante entre deux couches supports notamment grâce à la présence d'une troisième trémie 3. Il est donc nécessaire dans ce cas de disposer de trois vis sur la machine d'extrusion-gonflage qui procède à la réalisation d'une bulle :
- la vis I qui sert à l'intérieur de la bulle,
- la vis M qui sert à la partie médiane de la bulle
- la vis E qui sert à l'extérieur de la bulle.

Les conditions d'extrusion utilisées pour chacune d'elles sont telles que suit :

| Vis | Températures | Données | Matières |
|---|---|---|---|
| I | 150 - 160°C | Epaisseur 20 µ ; Densité : 0,923 | Formulation II |
| E | 150 - 160°C | Epaisseur 20 µ ; Densité : 0,923 | Formulation II |
| M | 140 - 150°C | Epaisseur 30 µ ; Densité : 1,19 | Formulation I |
| Tête | 160°C | | |

Le film issu de fabrication présente une couche thermocollante à structure alvéolaire dont les cavités représentent au moins 10% de l'ensemble de la structure de la couche thermocollante. Ce film peut alors être stocké avant d'être utilisé dans une étape de contre-collage ou de collage sur un support ou substrat. Dans le cas d'un contre-collage, ce contre-collage peut s'effectuer au moyen d'une calandre à cylindre ou au moyen d'une presse à plat selon des techniques bien connues à ceux versés dans cet art.

Il est à noter que tous les pourcentages donnés dans la description ci-dessus s'entendent en tant que pourcentage en poids de matière active et non de mélange maître.

## Revendications

1. Film thermocollant (1) destiné à être appliqué sur au moins un substrat (S1), de préférence textile, ou à être interposé entre deux substrats (S1, S2) de nature identique ou différente pour l'assemblage par contre-collage, généralement par thermocollage desdits substrats (S1, S2), ledit film thermocollant (1) étant constitué d'au moins une couche contenant au moins une matière thermoplastique extrudable thermocollante à une température supérieure à la température de fusion de ladite matière et éventuellement un agent anti-bloc et/ou anti-glissant,
**caractérisé en ce que** le film comprend, en sortie de fabrication, au moins une couche thermocollante à structure alvéolaire constituée de cavités ouvertes et/ou fermées, lesdites cavités étant le résultat de l'action d'au moins un agent gonflant contenu dans la couche thermocollante et actif lors de la fabrication du film.

2. Film thermocollant selon la revendication 1,
**caractérisé en ce que** l'agent gonflant ou au moins l'un des agents gonflants de la couche thermocollante est actif lors de l'extrusion de ladite couche ou en sortie d'extrudeuse de manière à former, à l'état extrudé de ladite couche, une couche thermocollante de film issu de fabrication présentant une structure alvéolaire constituée de cavités ouvertes et/ou fermées.

3. Film thermocollant selon l'une des revendications 1 et 2,
**caractérisé en ce qu'**au moins 90 % des cavités fermées sont ouvrables dans une plage de températures comprise entre la température de fusion de la matière thermoplastique thermocollante et la température de fusion de la matière thermoplastique thermocollante augmentée de 50°C.

4. Film thermocollant selon l'une des revendications 1 à 3,
**caractérisé en ce que** la couche thermocollante comprend au moins une résine thermoplastique choisie dans le groupe des composants constitués des
Polyéthylène ou polyéthylène modifié tel qu'un co-Polymère, un ter-Polymère
ou des Polypropylène ou polypropylène modifié tel qu'un co-Polymère ou un ter-Polymère
ou des Polyuréthane base polyester ou polyéther
ou des Polyamide ou co-Polyamide
ou des Polyester ou co-Polyester
ou des Elastomères.

5. Film thermocollant selon l'une des revendications 1 à 4,
**caractérisé en ce que** la couche thermocollante comprend au moins un agent gonflant chimique décomposé par réaction chimique exothermique au cours de l'extrusion pour libérer un gaz de préférence inerte, cet agent étant choisi de préférence dans le groupe des composants formé par les composés azo, tels que les azodicarbonamides et leurs dérivés, les dérivés de l'hydrazine, tels que le p-toluènesulfonylhydrazide, le 4,4-oxibis (benzènesulfonylhydrazide) , les semicarbazides, tels que le p-toluènesulfonylsemicarbazide, les tétrazoles, tels que le 5-phényltétrazole et les composés nitrosés tels que le N,N-dinitrosopentaméthylènetétramine.

6. Film thermocollant selon l'une des revendications 1 à 4,
**caractérisé en ce que** la couche thermocollante comprend au moins un agent gonflant chimique décomposé par réaction chimique endothermique au cours de l'extrusion pour libérer un gaz, de préférence inerte, cet agent gonflant étant choisi de préférence dans le groupe des constituants formé par les composés carbonates ou leurs dérivés, tels que le bicarbonate de sodium, utilisés en mélange avec au moins un agent d'activation, tel que l'acide citrique.

7. Film thermocollant selon l'une des revendications 1 à 4,
**caractérisé en ce que** la couche thermocollante comprend au moins un agent gonflant physique, tel qu'un gaz, injecté au cours de l'extrusion, ou un agent liquide transformé en gaz au cours de l'extrusion.

8. Film thermocollant selon l'une des revendications 1 à 7,
**caractérisé en ce que** la couche thermocollante comprend au moins un agent anti-bloc et/ou anti-glissant choisi dans le groupe des composants constitués par les amino-silicates, de préférence sous forme de billes de verre, les talcs, les silices synthétiques ou minérales, les carbonates de calcium pour les agents anti-blocs et par les érucamides, les oléamides, les stéaramides, l'éthylène Bis Stéaramide (EBS), les cires pour les agents glissants.

9. Film thermocollant selon l'une des revendications 1 à 8,
**caractérisé en ce que** le film (1) comprend au moins une seconde couche de préférence non thermocollante solidarisée à la couche thermocollante, de préférence au cours de l'extrusion, ladite couche dite support étant pelable pour permettre son élimination avant ou après collage du film sur son substrat (S1, S2).

10. Film thermocollant selon la revendication 9,
**caractérisé soit en ce que** la couche thermocollante est interposée entre deux couches support, de préférence non thermocollantes, pelables.

11. Film thermocollant selon l'une des revendications 9 et 10,
**caractérisé en ce que** la couche support, de préférence non thermocollante, est constituée d'au moins un composant choisi dans le groupe des composants formé par les polyéthylènes modifiés ou non et les polypropylènes modifiés ou non.

12. Film thermocollant selon l'une des revendications 9 à 11,
**caractérisé en ce que** les couches thermocollante et support du film sont co-extrudées.

13. Film thermocollant selon l'une des revendications 1 à 12,
**caractérisé en ce que** chaque couche du film est obtenue par extrusion gonflage.

14. Film thermocollant selon l'une des revendications 1 à 12,
**caractérisé en ce que** chaque couche du film est obtenue par extrusion coulage.

15. Film thermocollant selon l'une des revendications 1 à 14,
**caractérisé en ce qu'**il présente une épaisseur comprise dans la plage [5 - 200] microns, de préférence voisine de 35 microns.

16. Film thermocollant selon l'une des revendications 1 à 15,
**caractérisé en ce qu'**il comprend au moins une couche thermocollante dont la composition, exprimée en pourcentage en poids, est telle que suit :
- résine thermoplastique 70 à 99 %
de préférence voisine de 96,24 %
- agent glissant et/ou anti-bloc 0 à 29,8 %
de préférence voisine de 3,1 %
- agent gonflant 0,2 à 30 %
de préférence voisine de 0,66 %.

17. Procédé de fabrication d'un film thermocollant destiné à être appliqué sur au moins un substrat (S1), de préférence textile, ou à être interposé entre deux substrats (S1, S2) de nature identique ou différente pour l'assemblage par contre-collage, généralement par thermocollage desdits substrats (S1, S2), ledit film (1) étant constitué d'au moins une couche contenant au moins une matière thermoplastique extrudable thermocollante à une température supérieure à la température de fusion de ladite matière et éventuellement un agent anti-bloc et/ou anti-glissant,
**caractérisé en ce qu'**on introduit dans la matière constitutive d'au moins une couche thermocollante du film au moins un agent gonflant actif lors de l'extrusion ou en sortie d'extrudeuse et **en ce qu'**on conforme ladite couche thermocollante sous forme d'une couche de film par gonflage ou coulage de manière à former une couche thermocollante de film présentant une structure alvéolaire constituée de cavités ouvertes et/ou fermées.
